Europäisches Patentamt

European Patent Office

Office européen des brevets

(19)

(11) **EP 0 965 516 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(51) Int Cl.7: **B62D 53/08**

(21) Anmeldenummer: **99111248.3**

(22) Anmeldetag: **09.06.1999**

(54) **Zugfahrzeug mit gehärteter Sattelplatte, Verfahren zum Härten einer Sattelplatte für ein Zugfahrzeug**

Towing vehicle with hardened fifth wheel plate. Hardening method for fifth wheel plate of towing vehicle

Vehicule tracteur avec sellette d' attelage durcie. Procédé pour le durcissement d' une sellette d' attelage d' un véhicule tracteur

(84) Benannte Vertragsstaaten:
**DE ES FR GB IT NL**

(30) Priorität: **15.06.1998 DE 19826508**

(43) Veröffentlichungstag der Anmeldung:
**22.12.1999 Patentblatt 1999/51**

(73) Patentinhaber: **Rockinger GmbH
80935 München (DE)**

(72) Erfinder: **Amende, Welf Dr.
80995 München (DE)**

(74) Vertreter: **Herzog, Markus, Dipl.-Phys. Dr. et al
Weickmann & Weickmann
Patentanwälte
Postfach 86 08 20
81635 München (DE)**

(56) Entgegenhaltungen:
**DE-A- 4 019 591          DE-A- 19 637 511**

**Beschreibung**

Die Erfindung betrifft ein Zugfahrzeug mit einer Sattelkupplung zum Verbinden des Zugfahrzeugs mit einem Sattelauflieger, wobei die Sattelkupplung eine Sattelplatte mit einer Auflagefläche zum Abstützen des Sattelaufliegers aufweist, wobei zumindest in erhöhtem Verschleiß ausgesetzten Zonen der Sattelplatte an die Oberfläche der Auflagefläche angrenzendes Sattelplattenmaterial gehärtet ist.

Eine derartiges Zugfahrzeug ist beispielsweise aus der DE 40 19 591 A1 bekannt. Die Sattelplatte des bekannten Zugfahrzeugs weist in ihren erhöhtem Verschleiß ausgesetzten Zonen eine verschleißhemmende Härteschicht auf, welche durch Erwärmen der Oberfläche der Sattelplatte mittels einer Flamme und hierdurch eingeleitete Umwandlung von Ferrit in Austenit hergestellt ist. Mit dieser Härtung der Sattelplatte geht jedoch auch ein Verlust an Elastizität des Sattelplattenmaterials einher, zumindest an der Oberfläche der Sattelplatte, die im rauhen Alltagsbetrieb, d.h. sowohl im Fahrbetrieb als auch beim Auf- und Absatteln eines Aufliegers nicht nur einer Reibbeanspruchung sondern auch mechanischer Verformung unterworfen ist. Infolge des Elastizitätsverlusts kann es daher zur Bildung von Rissen in der Sattelplatte kommen. Darüber hinaus gehen infolge der Härtung auch die Schmiereigenschaften, insbesondere Notschmiereigenschaften, die die Sattelplatte durch geeignete Materialwahl üblicherweise aufweist, zumindest zu einem großen Teil verloren, was wiederum ein erhebliches Beschädigungsrisiko der Sattelplatte des bekannten Zugfahrzeugs nach sich zieht.

Demgegenüber ist es Aufgabe der vorliegenden Erfindung ein Zugfahrzeug der eingangs genannten Art anzugeben, dessen Sattelplatte trotz der Tatsache, daß sie zumindest in ihren erhöhtem Verscheiß ausgesetzten Zonen gehärtetes Sattelplattenmaterial aufweist, verglichen mit der Sattelplatte des bekannten Zugfahrzeugs verbesserte Elastizität und verbesserte Schmiereigenschaften aufweist.

Diese Aufgabe wird erfindungsgemäß durch ein gattungsgemäßes Zugfahrzeug gelöst, bei welchem in den Verschleißzonen jeweils eine Mehrzahl von Bereichen gehärteten Sattelplattenmaterials vorgesehen ist, welche durch Bereiche nicht gehärteten Sattelplattenmaterials voneinander getrennt sind. Erfindungsgemäß wird also von der Härtung der gesamten Sattelplattenoberfläche in den Verschleißzonen abgegangen, sondern es werden nur Teile dieser Verschleißzonen einer Härtung unterzogen. Diese gehärteten Teilzonen sind in nicht gehärtetes Sattelplattenmaterial eingebettet, dessen Eigenschaften durch die Härtung nicht beeinträchtigt worden sind. Das nicht gehärtete Sattelplattenmaterial kann daher im Alltagsbetrieb die erforderliche Elastizität und gewünschtenfalls auch die Schmiereigenschaften bereitstellen, während der Schutz vor erhöhtem Verschleiß infolge Reibbeanspruchung von den gehärteten Teilzonen gewährleistet wird. Die Sattelplatte kann beispielsweise aus Stahlguß- oder Sphäroguß-Material gebildet sein.

Bei der Anordnung der gehärteten Teilzonen bzw. der gehärteten Bereiche kann der Tatsache Rechnung getragen werden, daß im Betrieb bestimmte Beanspruchungen vermehrt auftreten. Beispielsweise kann bei einem Zugfahrzeug, bei welchem die Sattelplatte an einem Zugfahrzeugrahmen mittels einer Lagerbockanordnung um eine zur Geradeausfahrt-Richtung des Zugfahrzeugs im wesentlichen orthogonal verlaufende, im wesentlichen horizontale Querachse kippbar gelagert ist, vorgesehen sein, daß die gehärteten Bereiche in der Sattelplattenebene in einer Querachse im wesentlichen orthogonal verlaufenden Richtung voneinander getrennt sind.

Auch können die gehärteten Bereiche auf unterschiedlichste Art und Weise gestaltet sein. Beispielsweise kann die Sattelplatte an ihrer Auflagefläche wenigstens einen punktartigen Bereich gehärteten Sattelplattenmaterials umfassen. Unter einer "punktartigen" Gestalt wird dabei eine Gestalt verstanden, die in zwei zueinander orthogonalen Hauptrichtungen der Auflageflächenebene im wesentlichen die gleichen Abmessungen aufweist. Dementsprechend können punktartige gehärtete Bereiche beispielsweise einem Kreis, einer Ellipse, einem Quadrat, einem Rechteck, einem Trapez, einer Raute und dergleichen geometrischen Formen entsprechend oder ähnlich ausgebildet sein.

Zusätzlich oder alternativ ist es jedoch auch möglich, daß die Sattelplatte an ihrer Auflagefläche wenigstens einen linienartigen Bereich gehärteten Sattelplattenmaterials aufweist. Dabei wird unter einer "linienartigen" Gestalt eine Gestalt verstanden, die in einer der Hauptrichtungen erheblich größer bemessen ist als in der zu dieser orthogonalen Hauptrichtung. Die linienartige Gestalt braucht dabei nicht notwendigerweise geradlinig zu verlaufen, sondern kann auch gebogen, gekrümmt oder nach Art einer Schlangenlinie, eines Mäanders oder dergleichen verlaufen. Darüber hinaus ist es auch möglich, einzelne Teilabschnitte der Schlangenlinie jeweils als einen gesonderten linienartig verlaufenden, gehärteten Bereich anzusehen, wobei diese Teilabschnitte miteinander zusammenhängend ausgebildetsind.

Gemäß Vorstehendem wird also im gekuppelten Zustand eines Sattelaufliegers und des erfindungsgemäßen Zugfahrzeugs die Aufliegerplatte des Sattelaufliegers - übertrieben ausgedrückt - nur von den gehärteten Bereichen in den Verschleißzonen getragen, während das nicht gehärtete Sattelplattenmaterial lediglich für die Elastizität und die Schmiereigenschaften der Sattelplatte zu sorgen hat. Unterstellt man einmal eine ausschließlich punktartige Ausgestaltung der gehärteten Bereiche, so könnte man sagen, daß die Aufliegerplatte auf den Fingerkuppen einer Mehrzahl von Stützfingern, nämlich einer Mehrzahl von gehärteten Punktbereichen, abgestützt ist.

Um verhindern zu können, daß diese auf lokal begrenzte Bereiche beschränkte Abstützung zur Bildung von Rillen und Riefen in der Aufliegerplatte führt, insbesondere dann, wenn diese aus einem weichen Material wie Leichtmetall gebildet ist, wird in Weiterbildung der Erfindung vorgeschlagen, daß dem angrenzenden, nicht gehärteten Sattelplattenmaterial benachbarte, äußere Teilbereiche eines gehärteten Bereichs eine niedrigere Materialhärte aufweisen als von dem angrenzenden, nicht gehärteten Sattelplattenmaterial mit Abstand angeordnete, innere Teilbereiche des gehärteten Bereichs. Die gehärteten Bereiche weisen also nicht ein "scharfes" Härteprofil auf, sondern ein allmählich von der Härte des weichen angrenzenden Materials auf die volle Härte ansteigendes und dann wieder auf die niedrigere Härte des angrenzenden Materials abfallendes Profil auf. Hierdurch ist sichergestellt, daß die gehärteten Bereiche mit ihren Randzonen nicht in die Aufliegerplatte "einschneiden" können. Es versteht sich, daß eine entsprechende Härteprofilierung auch bei linienartigen gehärteten Bereichen von Vorteil ist.

Um darüber hinaus bei punktförmigen gehärteten Bereichen, welche zwangsläufig in bezüglich der Königszapfenaufnahme radialer Richtung voneinander beabstandet sind, bzw. bei im wesentlichen in Umfangsrichtung bezüglich der Königszapfenaufnahme der Sattelplatte verlaufenden linienartigen gehärteten Bereichen, welche aufgrund des Verlaufs in Umfangsrichtung wiederum in radialer Richtung voneinander beabstandet sind, der Bildung von Rillen und Riefen in der Aufliegerplatte eines Sattelaufliegers vorbeugen zu können, wird in Weiterbildung der Erfindung vorgeschlagen, daß in Umfangsrichtung bezüglich der Königszapfenaufnahme eine Mehrzahl von gehärteten Bereichen hintereinander und in Radialrichtung versetzt angeordnet sind. Die versetzte Anordnung kann dabei vorzugsweise derart gewählt sein, daß das normierte Härteintegral über die radiale Erstreckung der jeweils betrachteten Verschleißzone einen im wesentlichen konstanten Wert aufweist, wobei sich der Wert des normierten Härteintegrals in einem vorbestimmten Abstand von der Königszapfenaufnahme berechnet als das Integral über das Härteprofil des Sattelplattenmaterials in der jeweiligen Verschleißzone längs eines in dem vorbestimmten Abstand von der Königszapfenaufnahme verlaufenden Kreisbogens geteilt durch die Länge dieses Kreisbogens. Die Abweichung des radialen Verlaufs des normierten Härteintegrals von dem im wesentlichen konstanten Wert sollte dabei höchstens 25 %, vorzugsweise höchstens 20 %, noch bevorzugter höchstens 15 %, betragen.

Darüber hinaus wird vorgeschlagen, daß die längs ein und desselben Kreisbogens angeordneten gehärteten Bereiche im wesentlichen auf den gleichen Härtewert gehärtet sind oder/und längs dieses Krei bogens gemäß einem gewünschten Lastprofil verteilt sind, so daß die gehärteten Bereiche in allen Teilzonen der Verschleißzone im Mittel zu einer gewünschten Tragfähigkeit führen. Ferner ist vorgesehen, daß der Flächenanteil an der Gesamtfläche der Verschleißzone, welchen die gehärteten Bereiche einnehmen, in Abhängigkeit der Eigenschaften des Materials der Aufliegerplatte gewählt ist.

Die Erfindung betrifft darüber hinaus auch ein Verfahren zum Härten der Auflageflagefläche einer aus Gußmaterial gefertigten Sattelplatte durch lokales Erwärmen des Sattelplattenmaterials.

Wie bereits vorstehend angesprochen, ist aus der DE 40 19 591 A1 ein Flammhärtungsverfahren bekannt, bei welchem die Sattelplattenoberfläche mittels einer Flamme aufgeheizt wird. Hinsichtlich der Nachteile dieses Verfahrens sei auf die vorstehende Beschreibung verwiesen.

Im Gegensatz zu dem bekannten Flammhärtungsverfahren wird bei dem erfindungsgemäßen Verfahren zunächst von der Auflagefläche eine Gußmaterialschicht vorbestimmter Dicke abgetragen, beispielsweise mittels Fräsen, und dann das Sattelplattenmaterial lokal mittels eines Lasers erwärmt. Die Verwendung eines Lasers hat den Vorteil, daß die Erwärmungszone örtlich sehr viel schärfer begrenzt werden kann, als dies beispielsweise bei dem bekannten Flammhärtungsverfahren möglich ist. Darüber hinaus erwärmt sich das Sattelplattenmaterial unter dem Einfluß des Laserstrahls erheblich schneller als unter der Einwirkung einer Flamme. Somit kann die während des Härtens in der Sattelplatte vorhandene, von außen in diese eingebrachte Wärmemenge auf einem erheblich niedrigeren Wert gehalten werden als bei dem Flammhärtungsverfahren, so daß die Gefahr, daß es infolge der Härtung zu Verwerfungen der Sattelplatte oder dergleichen thermischen Spannungseffekten kommt, erheblich reduziert, wenn nicht gar vollkommen ausgeschlossen ist. Ein weiterer Vorteil ist darin zu sehen, daß aufgrund der hohen Ortsauflösung, die mit dem Laserstrahl erreichbar ist, das Sattelplattenmaterial ganz gezielt nur in vorbestimmten Bereichen der Auflagefläche gehärtet werden kann, so daß sich beispielsweise die vorstehend beschriebenen Härtungsmuster erzielen lassen.

Zur Laserhärtung kann beispielsweise ein $CO_2$-Laser, ein Nd-YAG-Laser oder ein Halbleiter-Laser verwendet werden, wobei der Laser eine mittlere Dauerstrichleistung oder gepulste Leistung von wenigstens 2 kW, vorzugsweise wenigstens 3 kW, aufweisen kann.

In Weiterbildung der Erfindung wird vorgeschlagen, daß eine den Laser auf der Auflagefläche abbildende Optik derart ausgebildet ist, daß der Laserfleck auf der Auflagefläche in einem zentralen Bereich eine höhere Leistungsdichte aufweist als in den Randbereichen des Laserflecks. Hierdurch kann ein vom Zentrum des gehärteten Bereichs zu den an das umgebende weiche Sattelplattenmaterial angrenzenden Randbereichen hin abfallendes Härteprofil erzielt werden, ohne daß hierzu die Behandlungszeit bzw. die Laserleistung gesteuert werden müßte.

Die Erfindung wird im folgenden anhand der beiliegenden Zeichnung an einem Ausführungsbeispiel näher erläutert werden. Es stellt dar:

Fig. 1      eine Teilansicht einer erfindungsgemäß gehärteten Sattelplatte eines Zugfahrzeugs;

Fig. 2a    eine schematische Darstellung einer Anordnung zum lokalen Erwärmen der Sattelplattenoberfläche;

Fig. 2b    ein mit der Anordnung gemäß Fig. 2a erzielbares Laserintensitätsprofil;

Fig. 3a    eine schematische Darstellung versetzt angeordneter gehärteter Bereiche;

Fig. 3b    das Härteprofil der gehärteten Bereiche gemäß Fig. 3a;

Fig. 3c    das Summenprofil der Härteprofile gemäß Fig. 3b; und

Fig. 4    eine Darstellung zur Erläuterung der Berechnung des normierten Härteintegrals.

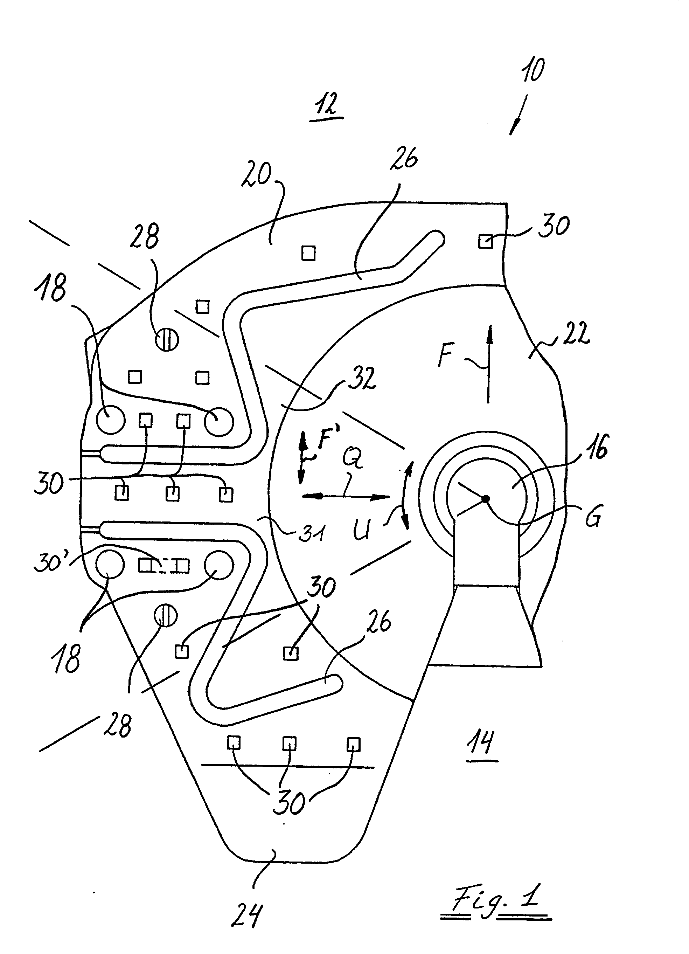

In Fig. 1 ist ein Teil einer Sattelplatte 10 eines Zugfahrzeugs 12 in Draufsicht dargestellt. Die Sattelplatte 10 weist an ihrem in Fahrtrichtung F des Zugfahrzeugs 12 gesehen hinteren Ende einen Einführschlitz 14 für den Königszapfen eines Sattelaufliegers auf. Der Einführschlitz 14 endet in einer Königszapfenaufnahme 16, in der der Königszapfen mittels einer nicht dargestellten Schloßkonstruktion gehalten und gesichert werden kann. Somit können das Zugfahrzeug 12 und der Sattelauflieger miteinander gelenkig verbunden werden, wobei die im wesentlichen vertikale Gelenkachse G durch den in der Aufnahme 16 gesicherten Königszapfen verläuft.

Die Sattelplatte 10 ist auf dem Rahmen des Zugfahrzeugs 12 mittels Stützfüßen um eine zur Fahrtrichtung F orthogonal verlaufende, horizontale Querachse Q kippbar gelagert. In Fig. 1 erkennt man lediglich die Befestigungsstellen 18 dieser Stützfüße. An ihrer im Fahrbetrieb des Zugfahrzeugs 12 nach oben weisenden Oberfläche weist die Sattelplatte 10 eine Auflagefläche 20 auf, auf der sich dann, wenn das Zugfahrzeug 12 mit einem Sattelauflieger gekoppelt ist, eine Aufliegerplatte des Sattelaufliegers abstützt. Der in Fig. 1 innere Ringbereich 22 ist bezüglich der Auflagefläche 20 etwas nach unten versetzt und trägt somit nicht zur Abstützung der Aufliegerplatte bei. An dem in Fahrtrichtung F hinteren Ende der Sattelplatte 10 sind ferner Auflaufschrägen 24 vorgesehen, die sich an die Auflagefläche 20 anschließen und zur Erleichterung einer Annäherungsbewegung des Zugfahrzeugs 12 an einen aufzusattelnden Sattelauflieger dienen.

In Fig. 1 erkennt man ferner Schmiernuten 26. Darüber hinaus sind Prüfstellen 28 vorgesehen, an welchen der Verschleißzustand der Sattelplatte überprüft werden kann. Die Sattelplatte ist üblicherweise aus einem Gußmaterial gefertigt, beispielsweise Stahlguß oder Sphäroguß. Sattelplatten aus beiden Materialien weisen eine ausreichende Elastizität auf, um sowohl im Fahrbetrieb als auch beim Auf- und Absatteln eines Sattelaufliegers auftretenden Beanspruchungen wiederstehen zu können.

Um überdies die Verschleißfestigkeit der Sattelplatte 10 und insbesondere deren Auflagefläche 20 zu erhöhen, ist das Sattelplattenmaterial der erfindungsgemäßen Sattelplatte 10 an über die Auflagefläche 20 verteilt angeordneten Stellen 30 einer Härtungsbehandlung unterzogen worden. Da die Sattelplatte 10 insbesondere im Bereich ihrer Verbindung mit den Stützfüßen hohem Verschleiß ausgesetzt ist, ist die Dichte der gehärteten Bereiche 30 in dieser Verschleißzone 32, die gemäß Fig. 1 durch die beiden gestrichelten, zur Querachse unter einem Winkel von etwa 30° verlaufenden Linien begrenzt ist, im Vergleich zur restlichen Auflagefläche 20 erhöht.

In der Darstellung gemäß Fig. 1 weisen die gehärteten Bereiche im wesentlichen quadratische Gestalt auf. Sie können jedoch auch eine beliebige andere Gestalt aufweisen, beispielsweise eine einem Kreis, einer Ellipse, einem Rechteck oder dergleichen ähnliche Gestalt aufweisen. Darüber hinaus ist es auch möglich, daß die gehärteten Bereiche 30 nicht punktartig über die Auflagefläche verteilt sind, wie dies in Fig. 1 dargestellt ist, sondern daß auf der Auflagefläche linienartige gehärtete Bereiche vorgesehen sind, wie dies in Fig. 1 beispielsweise bei 30' gestrichelt angedeutet ist. Diese linienartigen Bereiche können beispielsweise einen geradlinigen, schlangenlinienförmigen, mäanderförmigen oder dergleichen Verlauf nehmen.

Da die am häufigsten auftretende Verformung der Sattelplatte 10 ein Verbiegen um eine zur Querachse Q im wesentlichen parallel verlaufende Achse ist, sind die gehärteten Bereiche 30 in einer in der Sattelplattenebene und orthogonal zur Querachse Q verlaufenden Richtung F', welche unter Vernachlässigung der Verkippbarkeit der Sattelplatte 10 mit Fahrtrichtung F überinestimmt, voneinander mit Abstand angeordnet. Somit kann das zwischen diesen Bereichen angeordnete weiche Sattelplattenmaterial 31 mit seiner Elastizität die vorstehend angesprochene Verformung ermöglichen, ohne daß infolge der Härtungsbehandlung eine erhöhte Gefahr einer Rißbildung besteht.

Die lokal sehr begrenzten gehärteten Bereiche 30, die in der Praxis eine Ausdehnung von 20 mm bis 30 mm nicht übersteigen, werden in die Auflagefläche 20 mittels eines Laserhärtungsverfahrens eingebracht. Hierzu wird zunächst die Gußhaut von der Oberfläche der fertig gegossenen Sattelplatte 10 entfernt, so daß eine blanke und plane Auflagefläche 20 vorliegt. Auf diese Oberfläche lenkt man das Licht eines $CO_2$-Lasers mit etwa 3 kW mittlerer Dauerstrich-Leistung. Der Laserstrahl 33 wird dabei, wie dies in Fig. 2a grobschematisch dargestellt ist, mittels einer Strahlbehandlungsoptik 34 geformt, bevor er auf die Auflagefläche 20 trifft.

Die Strahlbehandlungsoptik 34 hat zum einen die Aufgabe, dem Laserstrahl den gewünschten Querschnitt zu verleihen, da die Gestalt des Laserflecks 36 auf der Auflagefläche 20 im wesentlichen für die Gestalt des durch die Laserbehandlung gehärteten Bereichs 30 verantwortlich ist. Darüber hinaus hat die Strahlbehandlungsoptik 34 aber auch die Aufgabe, die Lichtintensität des Laserstrahls 32 über den Laserfleck 36 gemäß einem gewünschten Profil zu verteilen, beispielsweise einem Profil wie es in Fig. 2b dargestellt ist. Bei diesem Profil weist die Lichtintensität in einem zentralen Bereich 36a des Laserflecks einen hohen Wert auf und fällt zu den Randbereichen 36b hin ab.

Ziel dieser Maßnahme bzw. eines derartigen Intensitätsprofils ist es, dem gehärteten Bereich ebenfalls ein von innen nach außen abfallendes Härtungsprofil zu verleihen, wie es beispielsweise in den Fig. 3a und 3b dargestellt ist. Der gehärtete Bereich 30 weist in einem zentralen Bereich 30a eine hohe Härte H auf, während die Härte in einem Umfangsbereich 30b zum angrenzenden, nicht gehärteten Sattelplattenmaterial 31 hin abnimmt. Zwar stellt sich ein derartiges nach außen hin weicher werdendes Profil auch allein durch den Wärmefluß aus einem durch den Laser erhitzten Bereich in das angrenzende kältere Sattelplattenmaterial ein, jedoch kann dieser Effekt in einfach vorherbestimmbarer und einfach zu kontrollierender Weise dadurch unterstützt bzw. dominiert werden, daß man gemäß Vorstehendem bereits das Laserlicht mit einer gewünschten Intensitätsverteilung auf die Auflagefläche 20 der Sattelplatte 10 einfallen läßt.

Da die lokal begrenzten gehärteten Bereiche in weicherem Sattelplattenmaterial eingebettet sind, beeinträchtigen sie weder die Elastizität noch die Schmiereigenschaften der Sattelplatte 10. Sie stellen jedoch verschleißarme Stützstellen bereit, auf denen die Aufliegerplatte des Sattelaufliegers ruht, und verbessern somit die Betriebseigenschaften und die Standfestigkeit der Sattelplatte 10. Im Hinblick auf eine möglichst gleichmäßige Flächenpressung sollten diese Stützstellen 30 zumindest in der Verschleißzone 32 möglichst gleichmäßig oder genauer gesagt möglichst entsprechend dem Lastprofil der auf der Sattelplatte 10 ruhenden Last verteilt sein (Flächenpressungs-Kriterium).

Bei punktförmigen Stützstellen besteht durchaus die Gefahr, daß diese zur Bildung von Rillen und Riefen in der Aufliegerplatte des Sattelaufliegers führen, insbesondere dann, wenn die Aufliegerplatte aus einem weichen Material, beispielsweise Leichtmetall, gebildet ist. Diesem unerwünschten Effekt wird bei der erfindungsgemäßen Sattelplatte 10 zum einen durch das vorstehend erläuterte Härtungsprofil entgegengewirkt, welche die Bildung von "scharfen", in das Material der Aufliegerplatte "einschneidenden" Kanten in den Randbereichen 30b der Stützstellen 30 verhindert.

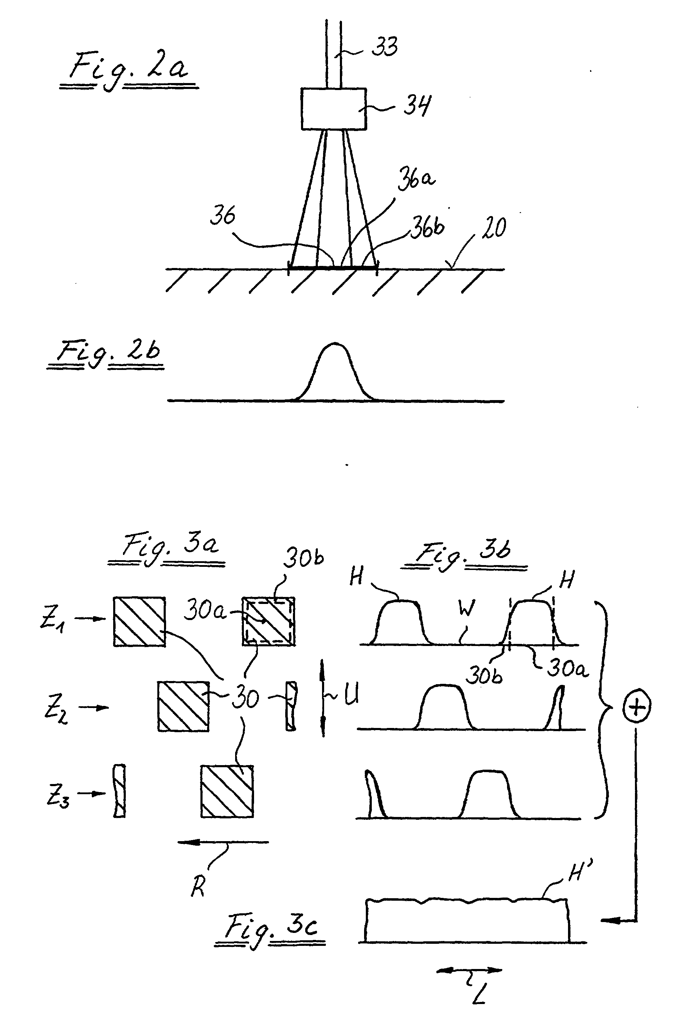

Zum anderen ist gemäß Fig. 3a bis 3c erfindungsgemäß vorgesehen, daß man in Umfangsrichtung U aufeinanderfolgende Stützstellen 30 in Radialrichtung R gegeneinander versetzt anordnet, wobei sich beide vorstehenden Richtungsangaben auf die Königszapfenaufnahme 16 bzw. die Drehachse G beziehen. Der hierdurch erzielte Effekt wird anhand Fig. 3b und 3c deutlich. In Fig. 3b sind in Gegenüberstellung zu Fig. 3a die Härteprofile der drei dargestellten Zeilen $Z_1$ bis $Z_3$ von Stützstellen 30 dargestellt. Zwischen jeweils zwei benachbarten Stützstellen, denen jeweils ein hoher Härtewert H zugeordnet ist, sinkt das Härteprofil auf den niedrigeren Härtewert W des weichen Sattelplattenmaterials 31 ab. Addiert man nun diese Zeilenhärteprofile zu einem Gesamthärteprofil auf, so erhält man das in Fig. 3c dargestellte Härteprofil. Man erkennt, daß das Gesamthärteprofil über die gesamte Zeilenlänge L einen im wesentlichen konstanten Wert H' aufweist und um diesen konstanten Wert nur geringfügig schwankt. Dabei sind im Hinblick auf die Bildung von Rillen und Riefen in der Aufliegerplatte und im Hinblick darauf, daß man bei der Anordnung der Stützstellen 30 auf der Auflagefläche 20 aufgrund der Befestigungsstellen 18 für die Stützfüße, gegebenenfalls der Schmiernuten 26 und dergleichen nicht die volle Auslegungsfreiheit hat, Abweichungen von bis 25 %, vorzugsweise von bis zu lediglich 15 % zu tolerieren.

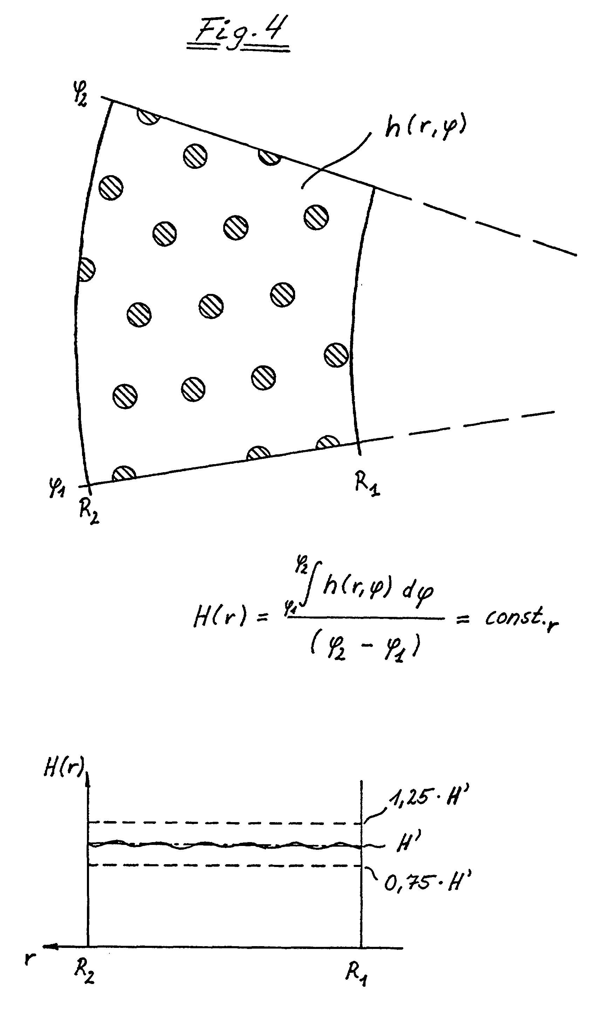

Möchte man die vorstehende "Rillen-Bedingung" unter Berücksichtigung der Härte auch des weicheren Sattelplattenmaterials sowie unter Berücksichtigung beliebiger Ausgestaltungen der gehärteten Bereiche 30 und beliebiger Erstreckung der Verschleißzonen 32 allgemeiner formulieren, so muß man von einer Härteverteilung $h(r,\varphi)$ des Sattelplattenmaterials ausgehen, wobei r den Abstand eines Punkts der Auflagefläche 20 vom Drehzentrum G bezeichnet und $\varphi$ die Winkelposition dieses Punkts in Umfangsrichtung U angibt (siehe Fig. 4). Betrachtet man lediglich die Verschleißzone 32, welche sich in einem Abstand r vom Drehzentrum G zwischen zwei Winkelpositionen $\varphi_1(r)$ und $\varphi_2(r)$ erstreckt, so sollte ein längs des Bogens zwischen diesen beiden Winkelpositionen berechnetes und auf die Länge dieses Bogens normiertes Härteintegral H(r) für alle Abstände r vom Drehzentrum G im wesentlichen den gleichen Wert aufweisen:

$$H(r) = \frac{\int_{\varphi_1(r)}^{\varphi_2(r)} h(r,\varphi)\, d\varphi}{(\varphi_2(r) - \varphi_1(r))} = \text{const.}$$

Abschließend sei darauf hingewiesen, daß die vorstehend angesprochene "Rillen-Bedingung" bei der Verteilung der gehärteten Bereiche 30 über die Auflagefläche 20 des in Fig. 1 dargestellten Prototyps einer erfindungsgemäß gehärteten Sattelplatte 10 nicht in letzter Konsequenz erfüllt wurde.

**Patentansprüche**

1. Zugfahrzeug (12) mit einer Sattelkupplung zum Verbinden des Zugfahrzeugs mit einem Sattelauflieger,
   wobei die Sattelkupplung eine Sattelplatte (10) mit einer Auflagefläche (20) zum Abstützen des Sattelaufliegers aufweist,
   wobei zumindest in erhöhtem Verschleiß ausgesetzten Zonen (32) der Sattelplatte (10) an die Oberfläche der Auflagefläche (20) angrenzendes Sattelplattenmaterial gehärtet ist,
   **dadurch gekennzeichnet, daß** in diesen Verschleißzonen (32) jeweils eine Mehrzahl von Bereichen (30) gehärteten Sattelplattenmaterials vorgesehen ist, welche durch Bereiche nicht gehärteten Sattelplattenmaterials (31) voneinander getrennt sind.

2. Zugfahrzeug nach Anspruch 1,
   bei welchem die Sattelplatte (10) an einem Zugfahrzeugrahmen mittels einer Lagerbockanordnung um eine zur Geradeausfahrt-Richtung (F) des Zugfahrzeugs (12) im wesentlichen orthogonal verlaufende, im wesentlichen horizontale Querachse (Q) kippbar gelagert ist,
   **dadurch gekennzeichnet, daß** die gehärteten Bereiche (30) in der Sattelplattenebene in einer zur Querachse (Q) im wesentlichen orthogonal verlaufenden Richtung (F') voneinander getrennt sind.

3. Zugfahrzeug nach Anspruch 1 oder 2,
   **dadurch gekennzeichnet, daß** die Sattelplatte (10) an ihrer Auflagefläche (20) wenigstens einen punktartigen Bereich (30) gehärteten Sattelplattenmaterials umfaßt.

4. Zugfahrzeug nach einem der Ansprüche 1 bis 3,
   **dadurch gekennzeichnet, daß** die Sattelplatte (10) an ihrer Auflagefläche (20) wenigstens einen linienartigen Bereich (30') gehärteten Sattelplattenmaterials umfaßt.

5. Zugfahrzeug nach einem der Ansprüche 1 bis 4,
   **dadurch gekennzeichnet, daß** dem angrenzenden, nicht gehärteten Sattelplattenmaterial (31) benachbarte, äußere Teilbereiche (30b) eines gehärteten Bereichs (30) eine niedrigere Materialhärte aufweisen als von dem angrenzenden, nicht gehärteten Sattelplattenmaterial (31) mit Abstand angeordnete, innere Teilbereiche (30a) des gehärteten Bereichs (30).

6. Zugfahrzeug nach einem der Ansprüche 1 bis 5,
   **dadurch gekennzeichnet, daß** in Umfangsrichtung (U) bezüglich einer zur Aufnahme eines Königszapfens eines Sattelaufliegers bestimmten Ausnehmung (16) der Sattelplatte (10) eine Mehrzahl von gehärteten Bereichen (30) hintereinander und in Radialrichtung (R) relativ zueinander versetzt angeordnet sind.

7. Zugfahrzeug nach Anspruch 6,
   **dadurch gekennzeichnet, daß** das normierte Härteintegral (H(r)) über die radiale Erstreckung einer jeweils betrachteten Verschleißzone (32) einen im wesentlichen konstanten Wert (H') aufweist, wobei sich der Wert des normierten Härteintegrals (H(r)) in einem vorbestimmten Abstand (r) von der Königszapfenaufnahme (16) als das Integral über das Härteprofil (h(r,φ)) des Sattelplattenmaterials in der jeweiligen Verschleißzone (32) längs eines in dem vorbestimmten Abstand (r) von der Königszapfenaufnahme (16) verlaufenden Kreisbogens geteilt durch die Länge dieses Kreisbogens berechnet.

8. Zugfahrzeug nach Anspruch 7,
   **dadurch gekennzeichnet, daß** die Abweichung des Werts des normierten Härteintegrals (H(r)) an jeder Stelle der radialen Erstreckung der Verschleißzone (32) von dem im wesentlichen konstanten Wert (H') höchstens 25 %, vorzugsweise höchstens 20 %, noch bevorzugter höchstens 15 %, beträgt.

9. Zugfahrzeug nach Anspruch 7 oder 8,
   **dadurch gekennzeichnet, daß** die längs ein und desselben Kreisbogens um die Königszapfenaufnahme (16) angeordneten gehärteten Bereiche (30) im wesentlichen auf den gleichen Härtewert gehärtet sind oder/und längs dieses Kreisbogens gemäß einem gewünschten Lastprofil verteilt sind.

10. Zugfahrzeug nach einem der Ansprüche 1 bis 9,
**dadurch gekennzeichnet, daß** der Flächenanteil an der Gesamtfläche der Verschleißzone (32), welchen die gehärteten Bereiche (30) einnehmen, in Abhängigkeit der Eigenschaften des Materials der Aufliegerplatte gewählt ist.

11. Verfahren zum Härten der Auflagefläche einer aus Gußmaterial gefertigten Sattelplatte durch lokales Erwärmen des Sattelplattenmaterials zur Herstellung einer Sattelplatte (10) für ein Zugfahrzeug (12) nach einem der vorhergehenden Ansprüche,
**dadurch gekennzeichnet, daß** man eine Gußmaterialschicht vorbestimmter Dicke von der Auflagefläche abträgt und daß man das Sattelplattenmaterial mittels eines Lasers erwärmt.

12. Verfahren nach Anspruch 11,
**dadurch gekennzeichnet, daß** man einen $CO_2$-Laser, einen Nd-YAG-Laser oder einen Halbleiter-Laser verwendet.

13. Verfahren nach Anspruch 11 oder 12,
**dadurch gekennzeichnet, daß** der Laser eine mittlere Dauerstrich-Leistung oder gepulste Leistung von wenigstens 2 kW, vorzugsweise wenigstens 3 kW, aufweist.

14. Verfahren nach einem der Ansprüche 11 bis 13,
**dadurch gekennzeichnet, daß** eine den Laserstrahl (33) auf der Auflagefläche (20) abbildende Optik (34) derart ausgebildet ist, daß der Laserfleck (36) auf der Auflagefläche (20) in einem zentralen Bereich (36a) eine höhere Leistungsdichte aufweist als in Randbereichen (36b) des Laserflecks (36).


**Claims**

1. A towing vehicle (12) with semi-trailer coupling for connecting the towing vehicle to a semimounted trailer, wherein the semi-trailer coupling has a semi-trailer plate (10) with a supporting surface (20) for supporting the semimounted trailer, wherein the semi-trailer plate material adjacent the surface of the supporting surface (20) is hardened at least in zones (32) of the semi-trailer plate (10) exposed to a high degree of wear, **characterised in that** in each of these wear zones (32) a plurality of zones (30) of hardened semi-trailer plate material is provided, which are separated from one another by zones of non-hardened semi-trailer plate material (31).

2. A towing vehicle according to Claim 1, in which the semi-trailer plate (10) is mounted tiltably on a towing vehicle chassis by means of a bearing block assembly about a substantially horizontal transverse axis (Q) extending substantially orthogonally to the straight travel direction (F) of the towing vehicle (12), **characterised in that** the hardened zones (30) are separated from one another in the semi-trailer plate plane in a direction (F') extending substantially orthogonally to the transverse axis (Q).

3. A towing vehicle according to Claim 1 or 2, **characterised in that** on its supporting surface (20) the semi-trailer plate (10) comprises at least one point-like zone (30) of hardened semi-trailer plate material.

4. A towing vehicle according to any one of Claims 1 to 3, **characterised in that** on its the supporting surface (20) the semi-trailer plate (10) comprises at least one linear zone (30') of hardened semi-trailer plate material.

5. A towing vehicle according to any one of Claims 1 to 4, **characterised in that** outer portions (30b) of a hardened zone (30) adjacent the adjoining non-hardened semi-trailer plate material (31) have a lower material hardness than inner portions (30a) of the hardened zone (30) arranged spaced apart from the adjoining non-hardened semi-trailer plate material (31).

6. A towing vehicle according to any one of Claims 1 to 5, **characterised in that** a plurality of hardened zones (30) are arranged consecutively in a circumferential direction (U) in relation to a recess (16) in the semi-trailer plate (10) intended to accommodate a king pin of a semimounted trailer, and are arranged offset in a radial direction (R) relative to one another.

7. A towing vehicle according to Claim 6, **characterised in that** the standardised hardness integral (H(r)) has a substantially constant value (H') over the radial extension of a respectively considered wear zone (32), wherein the value of the standardised hardness integral (H(r)) at a predetermined distance (r) from the king-pin socket (16) is calculated as the integral over the hardness profile (h(r,φ)) of the semi-trailer plate material in the respective wear zone (32) along a circular arc extending at the predetermined distance (r) from the king-pin socket (16) divided by the length of this circular arc.

8. A towing vehicle according to Claim 7, **characterised in that** the variation of the value of the standardised hardness integral (H(r)) at each point of the radial extension of the wear zone (32) from the substantially constant value (H') is at maximum 25 %, preferably at maximum 20 %, or even more preferably at maximum 15 %.

9. A towing vehicle according to Claim 7 or 8, **characterised in that** the hardened zones (30) disposed along the same circular arc about the king-pin socket (16) are hardened substantially to the same hardness value arid/or are spaced apart along this circular arc in accordance with a desired load profile.

10. A towing vehicle according to any one of Claims 1 to 9, **characterised in that** the surface portion of the total area of the wear zone (32) which is occupied by the hardened zones (30) is chosen as a function of the properties of the material of the semi-trailer plate.

11. A method of hardening the supporting surface of a semi-trailer plate (10) made from cast material by local heating of the semi-trailer plate material to produce a semi-trailer plate (10) for a towing vehicle (12) according to any one of the preceding claims.

12. A method according to Claim 11, **characterised in that** a $CO_2$ laser, an Nd-YAG laser or a semiconductor laser is used.

13. A method according to Claim 11 or 12, **characterised in that** the laser has an average continuous-wave output or a pulsed output of at least 2 kW, preferably at least 3 kW.

14. A method according to any one of Claims 11 to 13, **characterised in that** an optical system (34) imaging the laser beam (33) on the supporting surface (20) is so designed that the laser spot (36) on the supporting surface (20) has a higher power density in a central zone (36a) than in marginal zones (36b) of the laser spot (36).

**Revendications**

1. Véhicule tracteur (12) comprenant une sellette d'attelage permettant d'atteler une semi-remorque sur le véhicule tracteur,
   la sellette d'attelage comprenant une plaque d'attelage (10) présentant une surface d'appui (20) pour servir de support à la semi-remorque,
   le matériau de la plaque d'attelage qui est adjacent à la superficie de la surface d'appui (20) étant durci, au moins dans les zones (32) de la plaque d'attelage (10) qui sont exposées à une usure importante,
   **caractérisé en ce qu**'est prévue, dans ces zones d'usure (32), une pluralité de zones (30) où le matériau de la plaque d'attelage est durci, qui sont séparées les unes des autres par des zones (31) où le matériau de la plaque d'attelage n'est pas durci.

2. Véhicule tracteur selon la revendication 1,
   dans lequel la plaque d'attelage (10) est montée basculante sur un châssis de véhicule tracteur, au moyen d'un palier, autour d'un axe transversal (Q) sensiblement horizontal, sensiblement orthogonal à la direction de marche avant (F) du véhicule tracteur (12),
   **caractérisé en ce que** les zones durcies (30), situées dans le plan de la plaque d'attelage, sont séparées les unes des autres dans une direction (F') sensiblement orthogonale à l'axe transversal (Q).

3. Véhicule tracteur selon la revendication 1 ou 2,
   **caractérisé en ce que** la plaque d'attelage (10), sur sa surface d'appui (20), comprend au moins une zone (30) en matériau durci qui est en forme de point.

4. Véhicule tracteur selon l'une des revendications 1 à 3,

**caractérisé en ce que** la plaque d'attelage (10), dans sa surface d'appui (20), comprend au moins une zone (30') en matériau durci qui est du type ligne.

5. Véhicule tracteur selon l'une des revendications 1 à 4,
   **caractérisé en ce que** des zones partielles extérieures (30b) d'une zone durcie (30), voisines des zones adjacentes (31) où le matériau de la plaque d'attelage n'est pas durci, présentent une dureté inférieure à celle des zones partielles intérieures (30a) de la zone durcie (30), situées à distance des zones adjacentes (31) où le matériau de la plaque d'attelage n'est pas durci.

6. Véhicule tracteur selon l'une des revendications 1 à 5,
   **caractérisé en ce que**, dans la direction circonférentielle (U) par rapport à un évidement (16) ménagé dans la plaque d'attelage (10), destiné à recevoir le pivot d'attelage d'une semi-remorque, une pluralité de zones durcies (30) sont disposées les unes derrière les autres et sont décalées les unes par rapport aux autres dans la direction radiale (R).

7. Véhicule tracteur selon la revendication 6,
   **caractérisé en ce que** l'intégrale normée de la dureté (H(r)), sur l'extension radiale de chaque zone d'usure (32) observée, présente une valeur (H') sensiblement constante, la valeur de l'intégrale normée de la dureté (H(r)), à un écart (r) prédéterminé du logement pour le pivot d'attelage (16), étant calculée comme l'intégrale du profil de la dureté (h(r, $\varphi$)) du matériau de la plaque d'attelage, dans la zone d'usure (32) considérée, le long d'un arc de cercle situé à l'écart prédéterminé (r) du logement pour le pivot d'attelage (16), divisée par la longueur de cet arc de cercle.

8. Véhicule tracteur selon la revendication 7,
   **caractérisé en ce que** l'écart de la valeur de l'intégrale normée de la dureté (H(r)), en chaque point de l'extension radiale de la zone d'usure (32), par rapport à la valeur sensiblement constante (H') représente tout au plus 25 %, de préférence tout au plus 20 %, de façon encore préférée tout au plus 15 %.

9. Véhicule tracteur selon la revendication 7 ou 8,
   **caractérisé en ce que** les zones durcies (30), situées le long d'un seul et même arc de cercle autour du logement recevant le pivot d'attelage (16), sont durcies sensiblement à la même valeur de dureté et/ou sont réparties le long de cet arc de cercle suivant un profil de charge souhaité.

10. Véhicule tracteur selon l'une des revendications 1 à 9,
    **caractérisé en ce que** la portion de la surface totale de la zone d'usure (32) qu'occupent les zones durcies (30) est choisie en fonction des caractéristiques du matériau de la plaque d'appui.

11. Procédé destiné à durcir la surface d'appui d'une sellette d'attelage en fonte, par chauffage localisé du matériau qui constitue la plaque d'attelage, afin de fabriquer une plaque d'attelage (10) destinée à un véhicule tracteur (12), selon l'une des revendications précédentes,
    **caractérisé en ce qu'**une couche de fonte d'une épaisseur prédéterminée est enlevée de la surface d'appui, et **en ce que** le matériau de la plaque d'attelage est chauffé à l'aide d'un laser.

12. Procédé selon la revendication 11,
    **caractérisé en ce qu'**on utilise un laser $CO_2$, un laser Nd-YAG, ou un laser à semi-conducteur.

13. Procédé selon la revendication 11 ou 12,
    **caractérisé en ce que** le laser présente un rendement moyen en régime continu ou un rendement pulsé d'au moins 2kW, de préférence d'au moins 3 kW.

14. Procédé selon l'une des revendications 11 à 13,
    **caractérisé en ce qu'**un instrument optique (34) projetant le rayon laser (33) sur la surface d'appui (20) est conçu de telle sorte que le point laser (36) projeté sur la surface d'appui (20) présente, dans une zone centrale (36a), une puissance volumique plus élevée que dans les zones des bords (36b) du point laser (36).

Fig. 1

_Fig. 2a_

_Fig. 2b_

_Fig. 3a_

_Fig. 3b_

_Fig. 3c_

Fig. 4

$$H(r) = \frac{\int_{\varphi_1}^{\varphi_2} h(r,\varphi)\, d\varphi}{(\varphi_2 - \varphi_1)} = const._r$$